# EUROPEAN PATENT SPECIFICATION

(11) **EP 1 544 062 B1**
(45) Date of publication and mention of the grant of the patent: **04.06.2008**
(21) Application number: 04028723.7
(22) Date of filing: 03.12.2004
(51) Int. Cl.: B60R 22/34

(54) **Seat belt retractor**
Gurtaufroller
Enrouleur de ceinture

(30) Priority: 18.12.2003 JP 2003421073
(43) Date of publication of application: 22.06.2005
(73) Proprietor: TAKATA CORPORATION, Minato-ku, Tokyo 106-8510 (JP)
(72) Inventor: Hiramatsu, Koji, Tokyo 106-8510 (JP); Kitazawa, Kenji, Tokyo 106-8510 (JP)
(74) Representative: Vossius & Partner

(56) References cited:
- EP-A- 1 022 201
- DE-C1- 19 604 483
- DE-U1- 20 015 402

## Description

The present invention relates to the technical field of a seat belt retractor for retracting a seat belt, which can retract and withdraw a seat belt, and more specifically, belongs to the technical field of a seat belt retractor including an energy absorption mechanism (hereinafter, referred to as "EA mechanism" as appropriate) for absorbing and alleviating impact energy of the occupant by limiting load which is exerted on this seat belt due to the torsion deformation of a torsion bar, in the event of preventing the seat belt from being withdrawn in an emergency such as a case wherein vehicle deceleration acts on the vehicle at the time of a collision and so forth while wearing the seat belt.
DE 200 15 402 U1 relates to a. seat belt retractor for motor vehicles seat comprising first and second energy absorption elements. The first energy absorption element is activated in the inertial stage upon activation of a pawl due to a collision and subjects the seat belt with a high power of resistance. In case of a light or small occupant or a low speed collision or if the restraining force acting on the occupant during collision is too large the pawl is released and the second friction clutch having a lower resistance of power than the first friction clutch comes into operation.
EP 1 022 201 A1 , which comprises the features mentioned in the preamble of claim 1, relates to a seat belt retractor with a belt reel for the seat belt webbing comprising a load limited which allows the limited extraction of belt webbing with energy absorption when the belt reel is blocked, the absorption of energy being adjustable as a function of crash-related data and the rotating movement of the belt reel being scanned for this purpose when the extraction of belt webbing is limited. The load limiter can be designed as a hydraulic pump which flow is adjusted by means of a controllable valve.
DE 196 04 483 relates to a safety device for motor vehicles with an adjustable force limiting arrangement and concerns a safety device for motor vehicles, the device comprising a control apparatus which is connected to transducers in order to influence in controlled manner the restrained characteristic of a safety arrangement comprising a safety belt in order to protect the vehicle passengers within the context of the range of human tolerableness.

As regards the background art, it is referred to JP-A-2001-58559 (Patent Document 1), JP-A-2002-53007 (Patent Document 2), JP-A-2000-85527 (Patent Document 3), JP-A-2002-53008 (Patent Document 4), JP-A-10-258702 (Patent Document 5), JP-A-2001-106025 (Patent Document 6). Hitherto, seat belt equipment which has been provided in vehicles such as an automobiles and so forth has prevented the occupant from flying out from the seat, and protected the occupant by retaining the occupant with a seat belt in the aforementioned emergency.
With such seat belt equipment, seat belt retractors for retracting a seat belt have been provided. With these seat belt retractors, while a seat belt is retracted by a spool when the occupant does not wear the seat belt, the seat belt is withdrawn when the occupant wears the seat belt. With these seat belt retractors, a locking mechanism acts in the aforementioned emergency, and prevents rotation in the direction of withdrawing the spool, thereby preventing the seat belt from being withdrawn. Thus, the seat belt can firmly retain and protect the occupant.

Now, with the seat belt retractor of the conventional seat belt equipment, in the event that a seat belt restrains and protects the occupant in the emergency situation such as a vehicle collision and so forth, large vehicle deceleration occurs, and accordingly, the occupant is to be moved forward due to great inertia. Consequently, a heavy load is exerted on the seat belt, and also the occupant receives a large impact force from this seat belt. Though this impact force is not a particular problem for the occupant, limiting this impact force is preferable for the occupant.

To this end, some of conventional seat belt retractors have been developed with an arrangement wherein the load which is exerted on this seat belt is limited by providing a torsion bar, and impact energy is absorbed and alleviated while the occupant wears a seat belt in an emergency (for example, see Patent Document 1).

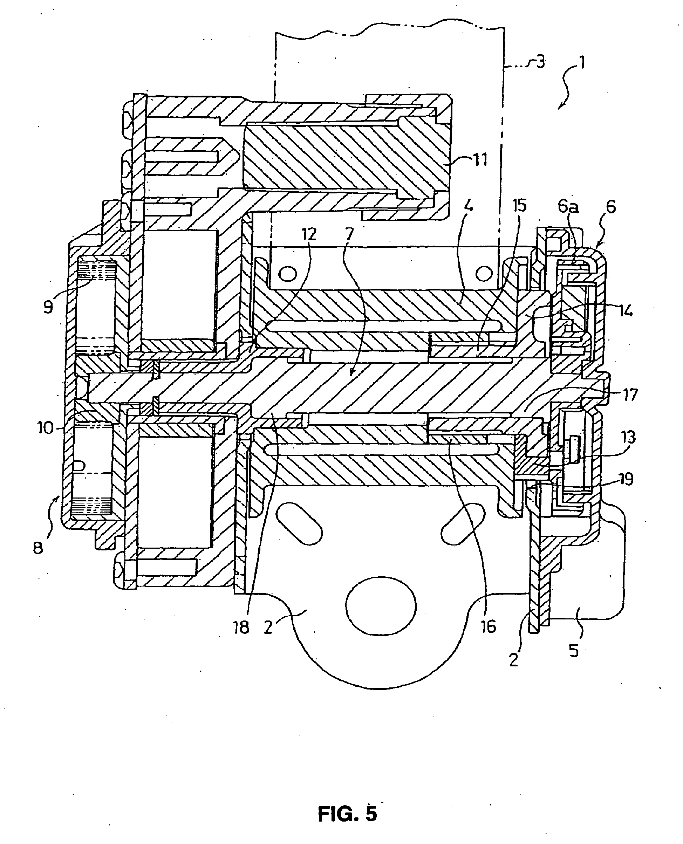

Fig. 5 is a longitudinal sectional view illustrating an embodiment of the seat belt retractor disclosed in this Patent Document 1. In the drawing, 1 denotes a seat belt retractor, 2 denotes a frame in the shape of a square with one end open, 3 denotes a seat belt, 4 denotes a spool rotatably supported between both side walls of the frame 2 in the shape of a square with one end open to retract the seat belt 3, 5 denotes deceleration sensing means for detecting large vehicle deceleration to be occurred in the aforementioned emergency and acting, 6 denotes a locking mechanism to be activated by the deceleration sensing means 5 for preventing at least rotation of the spool 4 in the direction of withdrawing a belt, 7 denotes a torsion bar (equivalent to the seat belt load limiting mechanism according to the present invention) for loosely fitting, penetrating, and rotationally interlocking the spool 4 and locking mechanism 6 in the axial direction centered on this spool 4, 8 denotes spring means for pressing the spool 4 in the belt-retracting direction via a bush 10 with the spring force of a spiral spring 9 all the time, 11 denotes a pretensioner for acting in the aforementioned emergency so as to generate belt retracting torque, and 12 denotes a bush for transmitting the seat belt retracting torque of the pretensioner 11 to the spool 4.

The locking mechanism 6 comprises a locking base (equivalent to the locking member according to the present invention) 14 capable of rotating integrally with a later-described first torque transmitting member 17 of the torsion bar 7, for supporting a pawl 13 so as to be oscillated, and a lock gear 6a which normally rotates integrally with the torsion bar 7, and in an emergency, stops rotation by operation of the deceleration sensing means 5, generates relative rotational difference, controls a pawl 13 to engage with a internal gear 19 of the side wall of the frame 2, and prevents rotation of the locking base 14, i.e., the spool 4 in the direction of withdrawing the seat belt. A male screw shank 15 is formed on the locking base 14, and a nut-shaped stopper member 16 for rotating integrally with the spool 4 is screwed onto this male screw shank 15.
Moreover, the torsion bar 7 is formed with a first torque transmitting member 17 for engaging with the locking base 14 so as not to perform relative rotation, and also with a second torque transmitting member 18 for engaging with the spool 4 so as not to perform relative rotation.

Subsequently, the spool 4 is always pressed in the direction of retracting the seat belt by the spring force of the spring means 8 via the bush 10, torsion bar 7, the second torque transmitting member 18 of the torsion bar 7, and bush 12. Also, the belt retracting torque generated at the pretensioner 11 is transmitted to the spool 4 via the bush 12 at the time of operation of the pretensioner 11, thus, the spool 4 retracts the seat belt 3 by a predetermined length.

With the conventional seat belt retractor 1 thus configured, the seat belt 3 is completely retracted by the pressing force of the spring means 8 when the occupant does not wear the seat belt 3. Upon the occupant withdrawing the seat belt 3 to wear it, the spool 4 rotates in the direction of withdrawing the seat belt, and the seat belt 3 is smoothly withdrawn. A tongue not shown which is slidably provided on the seat belt 3 is inserted in a buckle fixed to the vehicle so as to be latched, and then the seat belt 3 is fit against the occupant to a level that the occupant is not given a feeling of oppression.

In the aforementioned emergency, the seat belt retracting torque generated at the pretensioner 11 is transmitted to the spool 4, the spool 4 retracts the seat belt 3 by a predetermined length, and restrains the occupant firmly. On the other hand, the locking mechanism 6 is activated by operation of the deceleration sensing means 5 due to large vehicle deceleration occurred in an emergency. In other words, rotation of the locking gear 6a in the direction of withdrawing the seat belt is prevented by operation of the deceleration sensing means 5, the pawl 13 of the locking mechanism 6 rotates, and is engaged with the internal gear 19 on the side wall of the frame 2. Thus, rotation of the locking base 14 in the direction of withdrawing the seat belt is prevented, and accordingly, the torsion bar 7 is subjected to torsion, and only the spool 4 rotates relative to the locking base 14 in the direction of withdrawing the seat belt. Hereinafter, the spool 4 rotates in the direction of withdrawing the seat belt while subjecting the torsion bar 7 to torsion, the torsion torque of the torsion bar 7 limits load to be exerted on the seat belt 3, and consequently, impact which would be exerted on the occupant is absorbed and alleviated.

The stopper member 16, which rotates integrally with the spool 4, rotates relative to the male screw shank 15 which is screwed therewith by the spool 4 rotating relative to the locking base 14, and accordingly, moves toward the locking base 14. Subsequently, upon the stopper member 16 coming into contact with the locking base 14, further rotation of the stopper member 16 is prevented, rotation of the spool 4 is also prevented, and consequently, torsion of the torsion bar 7 is stopped. Thus, the seat belt 3 is prevented from withdrawing, the occupant is firmly restrained by the seat belt 3, and the maximum torsion of the torsion bar 7 is limited, thereby preventing cutting due to the torsion of the torsion bar 7.

Also, this conventional seat belt retractor 1 is configured wherein the locking base 14 of the locking mechanism 6 rotates relative to the locking gear 6a in the direction of withdrawing the seat belt even in the event that the seat belt is rapidly withdrawn, thus the pawl 13 of the locking mechanism 6 is engaged with the internal gear 19 on the side wall of the frame 2 as with the above description, rotation of the locking base 14 is prevented, rotation of the spool 4 in the direction of withdrawing the seat belt is prevented via the torsion bar 7, and consequently, the seat belt is prevented from withdrawing.

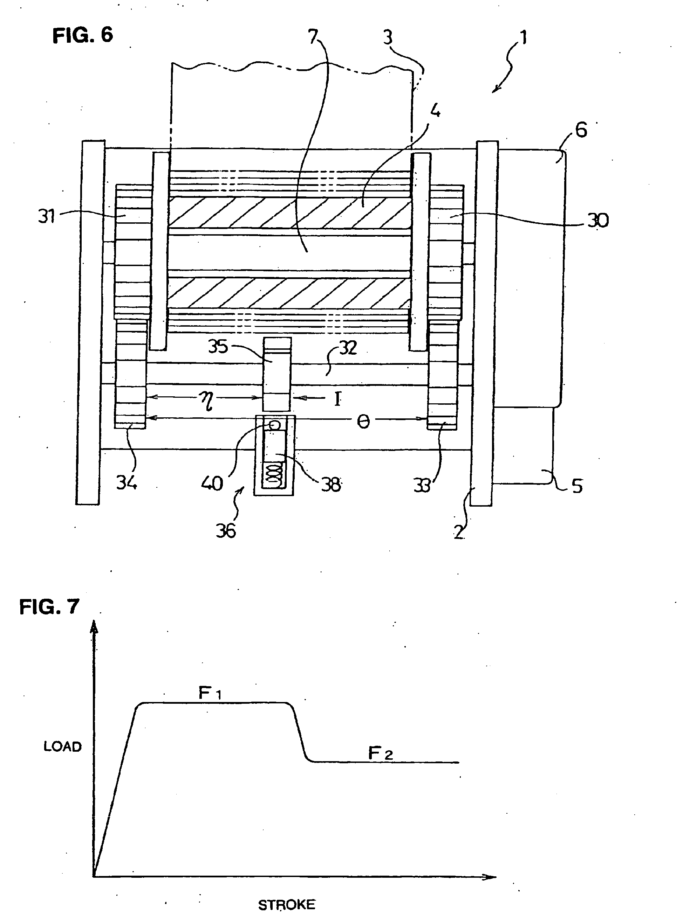

Furthermore, with Patent Document 1, the seat belt retractor 1 is disclosed wherein limit load (FL load) can be switched. More specifically, as shown in Fig. 6, in the initial stage following a collision, a locking member 38 pops out from a cylinder member 37 due to the spring force of a spring 39 upon a lock pin 40 being blown away by the gas discharged from the pretensioner 11. Thus, a ratchet pawl 35a of a lock wheel 35 is engaged with the locking member 38, and the lock wheel 35 is prevented from rotation in a direction CW of withdrawing the seat belt. Consequently, a second torsion bar 32 is subjected to torsion at a portion of length η shorter than the total length θ. Thus, EA operation due to the EA mechanism is started by means of torsion of the first torsion bar 7 and torsion of the second torsion bar 32, and FL load F₁ at this time is relatively large, as shown in Fig. 7. Also, with the subsequent stage following this initial stage, the second torsion bar 32 is subjected to fracture due to a predetermined amount of torsion, following which EA operation is performed due to only the first torsion bar 7 being subjected to torsion following the second torsion bar 32 breaking. FL load F₂ at this time is relatively small compared to the FL load at the initial stage, as shown in Fig. 7. Thus, the FL load is switched, the limit load to be exerted on the seat belt can be set flexibly and diversely depending on the restraining state of the occupant in an emergency by an airbag, and the like.

Note that as for the conventional EA mechanisms besides the aforementioned EA mechanism, an EA mechanism for drawing a wire rod provided on the locking base side through among engagement pins provided on the spool side (see Patent Document 2, for example), an EA mechanism for forcing a band plate of which one end is provided on the spool side to be deformed by a guide slot provided on the locking base side (see Patent Document 3, for example), an EA mechanism for subjecting a tubular member provided on the spool side to plastic deformation with a latching portion provided on the locking base (see Patent Document 4, for example), an EA mechanism for subjecting a U-shaped flat plate material of which one end is provided on the locking base side, and the other end is engaged with the spool side to deformation (see Patent Document 5, for example), an EA mechanism for subjecting a shear pin provided between the spool and locking base to shear fracture at the time of rotational lock of the locking base in an emergency (see Patent Document 6, for example), an EA mechanism for cutting a section to be cut provided on the spool side with a cutting blade provided on the locking base side (see Patent Document 6, for example), and the like have been proposed.

However, while the seat belt retractor 1 disclosed in Patent Document 1 can set the limit load diversely depending on the restrained status of the occupant, the limit load at the initial stage following a collision is set with only one kind of limit load. With the initial stage following a collision, impact energy to be exerted on the occupant is large, however, this impact energy varies diversely depending on the weight of the occupant, the slide position of the seat, collision speed, the manner of the collision, and the like. Thus, it is difficult to restrain the occupant more effectively and appropriately by handling large impact energy which varies diversely at the initial stage with only one kind of limit load.

Accordingly, the present invention has been made in light of the aforementioned problems, and it is an object of the present invention to provide a seat belt retractor including limit load setting means capable of setting the limit load to be exerted on a seat belt more flexibly and diversely depending on the situation in an emergency, and also capable of acting repeatedly.

A seat belt retractor according to Claim 1 solves the aforementioned problems.

Also, according to an invention according to Claim 2, the first seat belt load limiting mechanism comprises any one of; a load limiting mechanism for subjecting a torsion bar provided between the spool and the locking member to torsion deformation; a load limiting mechanism for drawing a wire rod provided on any one side of the spool side and the locking base side through among engagement pins provided on the other side; a load limiting mechanism for forcing a band plate provided on either one of the spool side and the locking base side to be forcibly deformed by a guide slot provided on the other side; a load limiting mechanism for subjecting a tubular member provided on either one of the spool side and the locking base side to plastic deformation with a latching portion provided on the other side; a load limiting mechanism for subjecting a U-shaped flat plate material of which one end is provided on either one of the spool side and the locking base side, and the other end is engaged with the other side to deformation; a load limiting mechanism for subjecting a shear pin provided between the spool and the locking base to shear fracturing; an EA mechanism for cutting a section to be cut provided on either one of the spool side and the locking base side with a cutting blade provided on the other side; and a load limiting mechanism for severing a plate-shaped energy absorption member provided on either one of the spool side and the locking base side with a severing protrusion provided on the other side.

Furthermore, according to an invention according to Claim 3, load modes in the three stages of a load mode due to the limit load setting means being inoperative, a light load mode, and a heavy load mode, are set to the limit load beforehand.

According to a seat belt retractor thus configured according to the inventions of Claims 1 through 3, this seat belt retractor comprises a programmable force limiter (PFL) for changing the limit load of a seat belt in an emergency based on the situation in an emergency such as information to be confirmed before a collision (for example, information of the weight of the occupant, information of the slide position of the seat, and the like), severity of the collision (for example, collision speed, manner of collision, and the like), and accordingly, the limit load of the seat belt in an emergency can be set more flexibly and diversely depending on the situation in an emergency. Thus, the occupant can be restrained and protected more effectively and appropriately at the time of a collision.

Also, since the limit load setting means can be activated repeatedly, even if the limit load setting means is once activated, there is no need to replace it with new limit load setting means, and it can be used again without any change, thereby enabling reductions in costs.
In particular, according to an invention of Claim 2, the first seat belt load limiting mechanism is configured of an existing load limiting mechanism or a load limiting mechanism having a simple configuration, thereby enabling reductions in costs.

Also, according to an invention according to Claim 3, the load mode of a seat belt retractor is set with three modes of a load mode due to inoperative limit load setting means, a light load mode, and a heavy load mode, and controls the load for a seat belt is controlled by three stages, and accordingly the occupant can be restrained and protected more efficiently at the time of a collision.

Description will be made below regarding the best mode for carrying out the present invention with reference to the drawings.
Fig. 1 shows an embodiment of a seat belt retractor according to the present invention with the configuration partially omitted;
Fig. 2 explains the setting of the load mode of a PFL shown in Fig. 1. (a) through (d) describe the setting of the light load mode, and (a), (b), (d), and (e) describe the setting of the heavy load mode;
Fig. 3 shows the properties of the FL load shown in Fig. 1;
Fig. 4 is a block diagram for setting a seat belt retractor 1 shown in Fig. 1 with the heavy/light load modes;
Fig. 5 is a longitudinal sectional view illustrating an embodiment of conventional seat belt retractors including a torsion bar;
Fig. 6 shows an embodiment of conventional seat belt retractors including a torsion bar schematically; and
Fig. 7 shows the properties of the FL load of a conventional embodiment shown in Fig. 6.
Note that the same components as those of the conventional seat belt retractor 1 shown in Fig. 5 described above will be denoted with the same reference numerals, and the description thereof will be omitted.

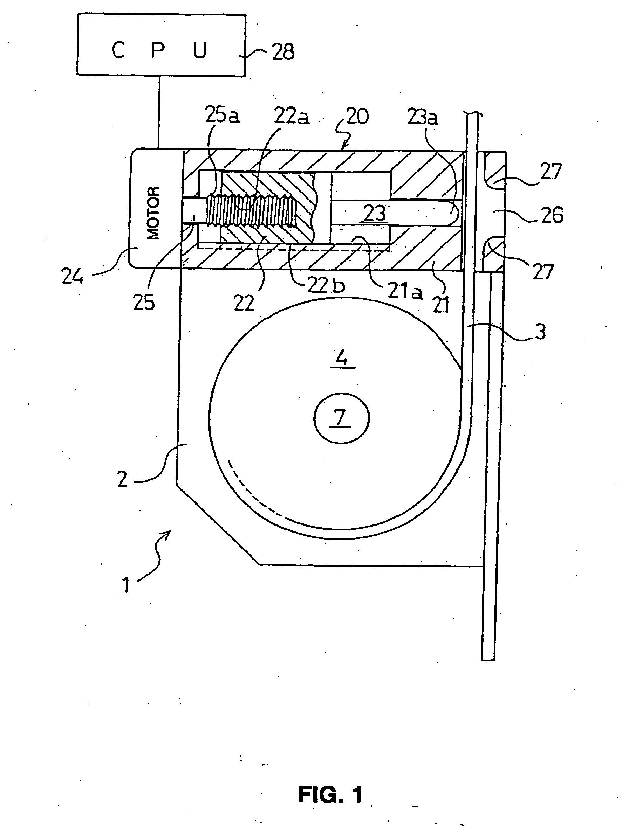

As shown in Fig. 1, the seat belt retractor 1 of this embodiment, as with the seat belt retractor 1 of the conventional embodiment shown in Fig. 5, includes a frame 2 in the shape of a square with one end open, a seat belt 3, a spool 4 for retracting the seat belt 3, and a torsion bar (equivalent to the first seat belt load limiting mechanism according to the present invention) 7. Also, though not shown in the drawing, the seat belt retractor 1 of this embodiment, as with the seat belt retractor 1 shown in Fig. 5, includes deceleration sensing means 5, locking mechanism 6, spring means 8, a pretensioner 11, and a bush 12 for transmitting the seat belt retracting torque of the pretensioner 11 to the spool 4.

Furthermore, the seat belt retractor 1 of this embodiment includes a programmable force limiter (hereinafter, referred to as PFL as appropriate) 20, and this PFL 20 is disposed above the spool 4 and fixed to the frame 2.
The PFL 20 can set the limit load (FL load) of a seat belt more flexibly according to the situation in an emergency by changing the limit load (FL load) of a seat belt in a collision based on the situation at the time of a collision (in an emergency) such as information to be confirmed before a collision (for example, information of the weight of the occupant, information of the slide position of the seat, and the like), severity of a collision (for example, collision speed, manner of collision, and the like).
Note that in Fig. 5 the pretensioner 11 is disposed above the spool 4, whereas in the case of the seat belt retractor 1 of this embodiment, since the PFL 20 is disposed above the spool 4, the pretensioner 11 is disposed below the spool 4, though not shown in the drawing.

This PFL 20 comprises a main body 21, a pressure piston 22 slidably provided within the main body 21 and including a female screw 22a, a pressure rod 23 fixed to this pressure piston 22 and provided within the main body 21 integrally and slidably with the pressure piston 22, an electric motor 24 attached to the main body 21, a driving shaft 25 connected to the rotational shaft of this motor 24 so as to rotate integrally with the rotational shaft and including a male screw 25a which is screwed with the female screw 22a of the pressure piston 22, a T-shaped opening 26 provided in the main body 21 so that the seat belt 3 can movably pass therethrough and the pressure rod 23 can enter thereinto, and belt receiving portions 27 for receiving the seat belt 3. Furthermore, a central processing unit (hereinafter, referred to as CPU as appropriate; equivalent to the limit load control means according to the present invention) 28, which is connected to the motor 24, for controlling the driving of this motor 24 to control the PFL 20.

Subsequently, upon the motor 24 driving and the driving shaft 25 rotating, the pressure piston 22 moves in the direction of the shaft thereof (left and right directions in Fig. 1). In this case, in order to prevent the pressure piston 22 from rotating in accordance with rotation of the driving shaft 25, for example, an arrangement may be made wherein a guide slot 22b is formed on the pressure piston 22 in the shaft direction, and also a guide rail 21a is provided in the main body 21, in which the guide slot 22b is fitted, and this pressure piston 22 moves in the shaft direction along the guide rail 21a while preventing rotation of the pressure piston 22. It is needless to mention that means are not restricted to this, other means for preventing rotation of the pressure piston 22 may be employed.

Upon the pressure piston 22 moving rightward in Fig. 1, the pressure rod 23 also moves rightward, and a tip 23a of the pressure rod 23 comes into contact with the seat belt 3, and pressed this seat belt 3. Thus, the seat belt 3 is nipped between the tip 23a of the pressure rod 23 and the belt receiving portions 27 (described in detail later). At this time, the tip 23a of the pressure rod 23 is formed as a hemispheric curved surface, and also the edge portion of the belt receiving portions 27 is formed roundly (R portion), and accordingly, the seat belt 3 is prevented from damage at the time of being nipped.
A limit load (PFL load) by PFL 20 is exerted on the seat belt 3 due to this nipping of the seat belt 3. Accordingly, this PFL 20 makes up the limit load setting means according to the present invention.

Also note that the load mode in three stages of the FL load, i.e., (1) a load mode due to inoperative PFL 20, (2) a light load mode, and (3) heavy load mode are set to the seat belt retractor 1 of this embodiment.

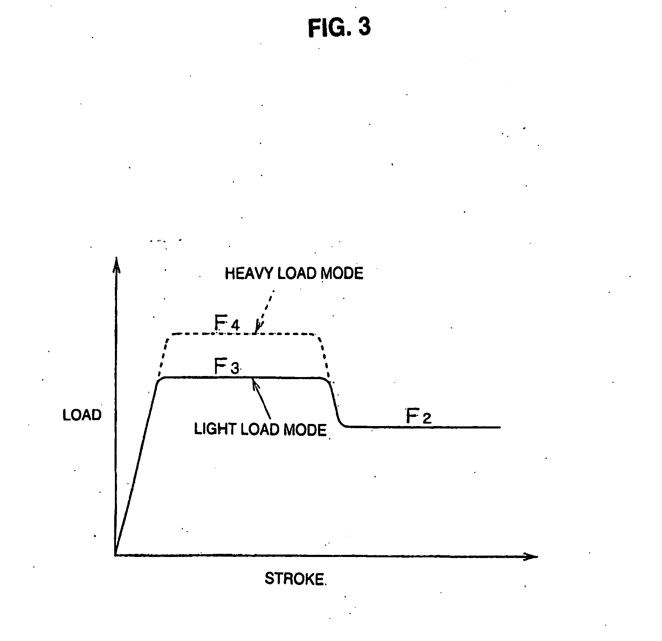

(1) The load mode due to inoperative PFL 20 is a load mode due to torsion of the torsion bar, in which the PFL 20 does not activate (inoperative status shown in Fig. 1). In other words, an EA operation is performed only due to torsion of the torsion bar 7, and the FL load F₂ at this time is small as shown in Fig. 3.

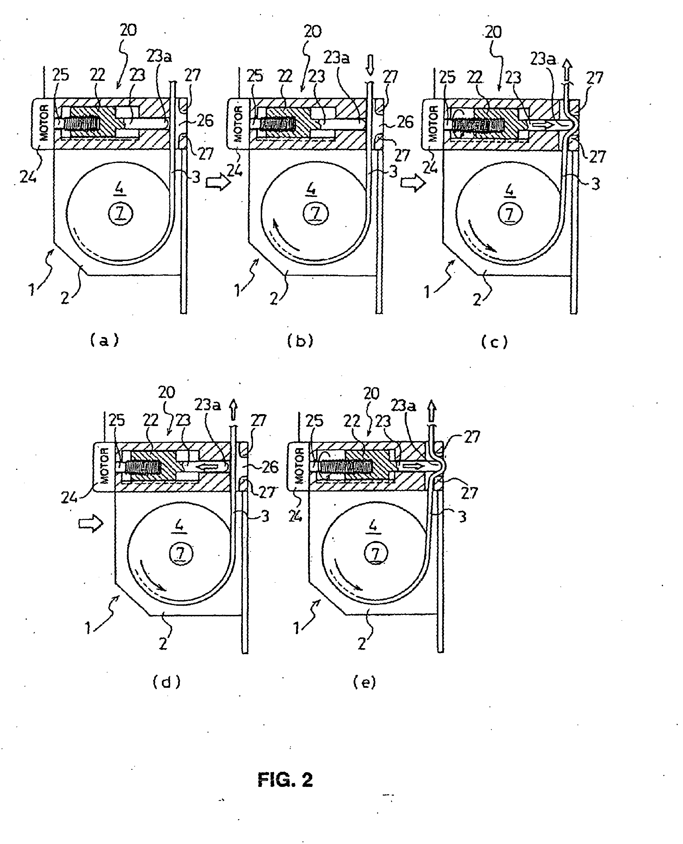

(2) The light load mode is a load mode in which the driving force of the motor 24 is set so as to be relatively small. More specifically, with the inoperative status of the PFL 20 shown in Fig. 2 (a), the pretensioner 11 is activated due to collision, the spool 4 rotates in the direction of retracting the seat belt so as to retract the seat belt 3 as indicated in Fig. 2(b), and the occupant is restrained by the pretensioner 11 in the same way as with the conventional embodiment.

Next, upon operation of the pretensioner 11 being completed as shown in Fig. 2 (c), the seat belt 3 is withdrawn due to inertia of the occupant as with the conventional embodiment, the torsion bar 7 is subjected to torsion, and the motor 24 is driven. Thus, both pressure piston 22 and pressure rod 23 move rightward by driving of the motor 24. The seat belt 3 is nipped between the tip 23a of the pressure rod 23 and belt receiving portions 27 by the pressure rod 23 moving rightward. At this time, the driving force of the motor 24 is set small, and accordingly, the nipping force for the seat belt 3 is comparatively small. Accordingly, friction between the pressure rod 23 and belt receiving portions 27 becomes comparatively small, and the light load mode, of which load for the seat belt 3 is small, is set. With this light load mode, PFL load is comparatively small. Accordingly, in this case, the FL load F₃ of the seat belt 3, which is made up of this small PFL load and load due to the torsion of the torsion bar 7, is comparatively small as shown by the solid line in Fig. 3.

Next, upon the motor 24 being rotated in reverse, both the pressure piston 22 and the pressure rod 23 move leftward, and reach the inoperative position shown in Fig. 2 (d).
Thus, the operation of the PFL 20 is completed, the tip 23a of the pressure piston 23 is separated from the seat belt 3, and the nipping force for the seat belt 3 is released. Hereinafter, as with the conventional embodiment, an EA operation is performed by only the torsion bar 7 being subjected to torsion, and the load mode due to inoperative PFL 20 mentioned above is set. Accordingly, the FL load F₃ at this time is small as shown in Fig. 3.

(3) The heavy load mode is a load mode in which the driving force of the motor 24 is set so as to be comparatively large. More specifically, as with the case of the aforementioned light load mode, both pressure piston 22 and pressure rod 23 move rightward, and the seat belt 3 is nipped between the tip 23a of the pressure rod 23 and the belt receiving portions 27. At this time, since the driving force of the motor 24 is set large, as shown in Fig. 2 (e), the amount of rightward movement of the pressure piston 22 and pressure rod 23 is greater than that in the case of the aforementioned light load mode, and consequently, the nipping force for the seat belt 3 becomes large. Thus, friction between the pressure rod 23 and belt receiving portions 27 becomes large, and the heavy load mode, of which load for the seat belt 3 is large, is set. With this heavy load mode, PFL load is comparatively large. Accordingly, in this case, the FL load F₄ of the seat belt 3, which is made up of this large PFL load and load due to the torsion of the torsion bar 7, is comparatively large as shown in the dashed line in Fig. 3.

Next, as with the light load mode, upon the motor 24 being rotated in reverse, both the pressure piston 22 and the pressure rod 23 reach the inoperative position shown in Fig. 2 (a), the operation of the PFL 20 is completed, and the nipping force for the seat belt 3 is released. Hereinafter, as with the conventional embodiment, an EA operation is performed by only the torsion bar 7 being subjected to torsion, and the load mode due to inoperative PFL 20 mentioned above is set. Accordingly, the FL load F₂ at this time is small as shown in Fig. 3.
Thus, the PFL 20 of the seat belt retractor of this embodiment is a friction-load-type PFL which can be activated repeatedly by controlling the rotational direction of the motor 24.

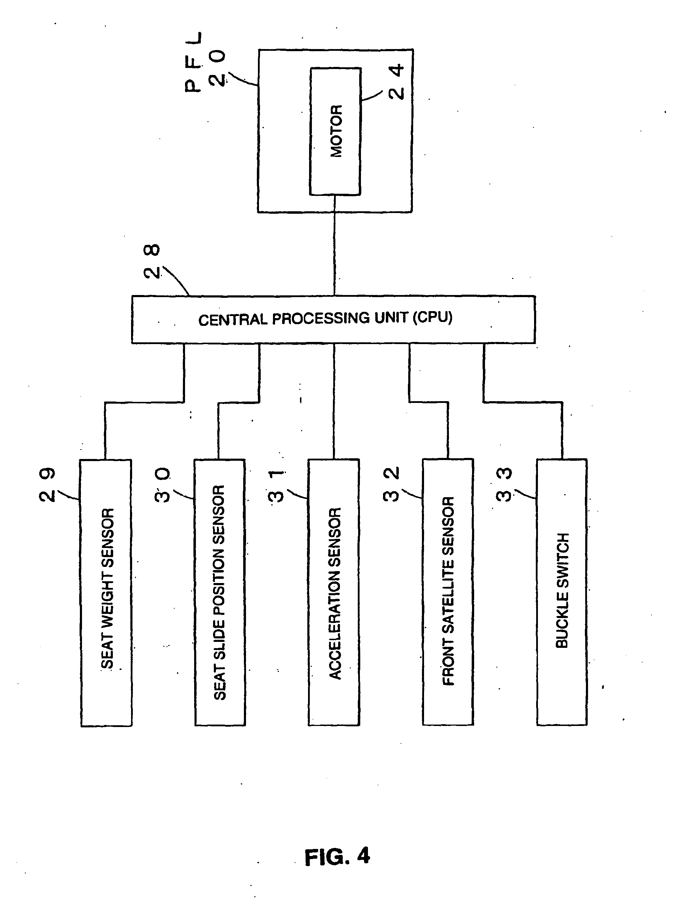

Fig. 4 is a block diagram for setting the seat belt retractor 1 of this embodiment to the aforementioned three load modes.
In order to perform setting of the three load modes, the CPU 28 stores the predetermined conditions for activating the PFL 20. Subsequently, the CPU 28 changes the FL load at the time of a collision based on information to be confirmed before a collision (for example, information of the weight of the occupant, information of the slide position of the seat, and the like).

Accordingly, as shown in Fig. 4, the CPU 28 is connected to the motor 24 as described above, and also a seat weight sensor 29 for detecting the seat load of a vehicle seat, i.e., the weight of the occupant, a seat slide position sensor 30 for detecting the slide position of the vehicle seat, an acceleration sensor 31 for detecting the acceleration of the vehicle, a front satellite sensor 32 for detecting the horizontal manner of collision at the front portion of the vehicle, and a buckle switch 33 which is turned on when the tongue is engaged with the buckle, are connected to the CPU 28.

Subsequently, the CPU 28 sets the seat belt retractor 1 with any one of the aforementioned load modes in three stages by controlling the motor 24 to turn on (driving) or off (non-driving) following the conditions for activating the PFL 20 based on the information to be confirmed before a collision due to detection signals from the seat weight sensor 29, seat slide position sensor 30, acceleration sensor 31, and front satellite sensor 32. Description will be made more specifically regarding the conditions for activating the PFL 20.

(a) Conditions for activating the PFL 20 based on the weight of the occupant who sits on the vehicle seat.
   These conditions are conditions for determining which of the aforementioned three stage load modes is set based on the weight of the occupant who sits on a vehicle seat. That is to say,
   (i) In the case of a light and small occupant → set the load mode due to inoperative PFL 20.
   (ii) In the case of a middle-weight average occupant → set the light load mode.
   (iii) In the case of a heavy and large occupant → set the heavy load mode.
The CPU 28 controls the motor 24 to turn on or off based on the weight information of the occupant by means of the detection signal from the seat weight sensor 29. These conditions for activation can be applied to the occupant who sits on any vehicle seat, in particular, which is preferable for the occupant who sits on the passenger seat or back seat.

(b) Conditions for activating the PFL 20 based on the forward or backward slide position of the vehicle seat.
   These conditions are conditions for determining which of the aforementioned three stage load modes is set based on the slide position of a vehicle seat. That is to say,
   (i) In the case of a small occupant whose seat position is forward
      → set the load mode due to inoperative PFL 20.
   (ii) In the case of a medium occupant whose seat position is around the middle
      → set the light load mode.
   (iii) In the case of a large occupant whose seat position is at the back
      → set the heavy load mode.
The CPU 28 controls the motor 24 to turn on or off based on the slide position of the vehicle seat by means of the detection signal from the seat slide position sensor 30. These conditions for activation can be applied to the occupant who sits on a front seat, in particular, which is preferable for the driver who sits on the driver seat.

Furthermore, in the case of the seat belt retractor 1 of this embodiment, whether or not the PFL 20 is allowed to act is determined based on the on or off state of the buckle switch 33. More specifically, the CPU 28 sets the PFL 20 operative when a tongue is engaged with a buckle based on the on/off signal from the buckle switch 33, on the other hand, sets the PFL 20 to inoperative when the tongue is not engaged with the buckle.

Furthermore, in the case of the seat belt retractor 1 of this embodiment, the operation of the PFL 20 is changed based on the severity of a collision. More specifically, the CPU 28 determines whether the occupant is small or large (including medium) based on the detection signal from the seat weight sensor 29 or seat slide position sensor 30, and also determines whether the collision is a low-speed collision (20 to 30 km/h, for example, but not restricted to this) or middle-high-speed collision (30 km/h or higher, for example, but not restricted to this) based on the detection signal from the acceleration sensor 31. Subsequently, the CPU 28, in case that the occupant is small, sets the load mode due to inoperative PFL 20 in the event of a low-speed collision, and also sets the light load mode in the event of a middle-high-speed collision, further, in case that the occupant is large, sets the light load mode in the event of a low-speed collision, and also sets the heavy load mode in the event of a middle-high-speed collision.

Furthermore, in the case of the seat belt retractor 1 of this embodiment, the operation timing of the PFL 20 is changed based on the severity of a collision. More specifically, the CPU 28 determines whether the collision is a low-speed collision (20 to 30 km/h, for example, but not restricted to this), middle-speed collision (30 to 40 km/h, for example, but not restricted to this), or high-speed collision (40 km/h or higher, for example, but not restricted to this) based on the detection signal from the acceleration sensor 31. Subsequently, in the event of a low-speed collision the CPU 28 sets the operation start timing of the PFL 20 slow (35 msec after collision, for example, but not restricted to this), and also in the event of a middle-speed collision sets the operation start timing of the PFL 20 comparatively slow (faster than that in the low-speed collision, 25 msec after collision, for example, but not restricted to this), further, in the event of a high-speed collision sets the operation start timing of the PFL 20 comparatively fast (15 msec after collision, for example, but not restricted to this).

Note that following a collision, the operation start timing of the PFL 20 may be changed according to the crash severity of the vehicle. Also, the operation start timing of the PFL 20 may be changed with the fixed delay timing following the ignition of the pretensioner 11 along with the operation timing of the pretensioner 11.

Furthermore, in the case of the seat belt retractor 1 of this embodiment, the operation of the PFL 20 is changed based on the severity and manner of collision. More specifically, the CPU 28 determines whether the collision is a collision offset to the right side or collision offset to the left side based on the detection signal from the acceleration sensor 31 and the detection signal from the front satellite sensor 32. Subsequently, the CPU 28, in the event of a collision offset to the right side (collision inclined to the right side of the vehicle), sets the operation start timing of the PFL 20 fast at the retractor of the right-side seat belt equipment provided on the right-side seats, and also sets the operation start timing of the PFL 20 slow at the retractor of the left-side seat belt equipment provided on the left-side seats, and inversely, in the event of a collision offset to the left side (collision inclined to the left side of the vehicle), sets the operation start timing of the PFL 20 fast at the retractor of the left-side seat belt equipment provided on the left-side seats, and also sets the operation start timing of the PFL 20 slow at the retractor of the right-side seat belt equipment provided on the right-side seats.

Also, the CPU 28 determines whether the collision is a right-side oblique collision or left-side oblique collision based on the detection signal from the acceleration sensor 31 and the detection signal from the front satellite sensor 32. Subsequently, the CPU 28, in the event of the right-side oblique collision, sets the operation start timing of the right side of the PFL 20 fast, and also sets the operation start timing of the left side of the PFL 20 slow. Inversely, in the event of the left-side oblique collision, the CPU 28 sets the operation start timing of the left side of the PFL 20 fast, and also sets the operation start timing of the right side of the PFL 20 slow.
Thus, the second seat belt load limiting mechanism according to the present invention is configured of the PFL 20 and CPU 28.
The other configurations and other operations of the seat belt retractor 1 of this embodiment are the same as with the conventional embodiment shown in Fig. 5.

The seat belt retractor 1 of this embodiment comprises the PFL 20 for changing the limit load (FL load) of the seat belt at the time of a collision based on information to be confirmed before a collision (for example, information of the weight of the occupant, information of the slide position of the seat, and the like), severity of a collision (for example, collision speed, manner of collision, and the like), and accordingly, the FL load of the seat belt 3 at the time of a collision can be set more flexibly and diversely depending on the situation at the time of a collision. Thus, the occupant can be restrained and protected more effectively and appropriately at the time of a collision.

Also, since the PFL 20 can be activated again due to the motor 24, the PFL 20 can be activated repeatedly. Accordingly, even if the PFL 20 is activated once, there is no need to replace it with a new PFL, and it can be used again, thereby enabling reductions in costs. In this case, the pretensioner should be replaced when the pretensioner cannot be activated repeatedly, and on the other hand, the pretensioner should be used again when the pretensioner can be activated repeatedly.
In particular, since the known and existing torsion bar 7 serving as the first seat belt load limiting mechanism is employed, the load limiting mechanism can be formed with a simple configuration at low cost.

Furthermore, since the load mode of the seat belt retractor 1 is set with the three load modes of the load mode due to inoperative PFL 20, light load mode, and heavy mode, and the load for the seat belt 3 is controlled in three stages, the occupant can be restrained and protected more efficiently at the time of a collision.

Note that with the aforementioned embodiment, while the load mode is set in three stages, and the load for the seat belt 3 is controlled in three stages, the number of stages is not restricted to this, more stages than two stages may be set, and the load for the seat belt 3 may be controlled consecutively.
Also, with the aforementioned embodiment, while the pretensioner 11 is provided, the pretensioner 11 is not always needed, and may be omitted. However, in order to restrain and protect the occupant more effectively at the time of a collision, the pretensioner 11 is preferably provided.

Furthermore, with the aforementioned embodiment, while description has been made regarding the case of a vehicle collision, when rotation of the locking base 14 is locked, and a collision predicting sensor (a relative distance sensor for detecting the relative distance between the vehicle itself and an obstacle such as a forward obstacle or the like, a relative speed sensor for detecting a relative speed between the vehicle itself and the vehicle in front of the vehicle itself, as well as the aforementioned various sensors 29, 30, 31, and 32, for example) predicts the possibility of collision with an obstacle, the motor 24 is driven, the load is exerted on the seat belt 3 by the PFL 20 as described above, following which the PFL 20 may be set in a non-activated status by rotating the motor 24 inversely when the collision is prevented. In this case, the PFL 20 can be activated again.

Furthermore, with the aforementioned embodiment, while the torsion bar 7 is employed as the first seat belt load limiting mechanism, an EA mechanism disclosed in the aforementioned Patent Documents 2 through 6 may be employed instead of this torsion bar 7. Also, an EA mechanism for severing a plate-shaped energy absorption member provided on the locking base side with a severing protrusion provided on the spool side, which has been subjected to application for patent by the Present Inventor (Japanese Unexamined Patent Application No. 2003-206807), may be employed as the first seat belt load limiting mechanism.

The seat belt retractor according to the present invention can be advantageously employed for a seat belt retractor for a seat belt deice equipped in a vehicle such as an automobile, wherein the load exerted on the seat belt in an emergency such as a collision and so forth is limited so that the impact energy exerted on the occupant is absorbed and alleviated, while the seat belt is prevented from being withdrawn.

## Claims

1. A seat belt retractor comprising at least:
a spool (4) for retracting a seat belt (3);
a locking mechanism (6) including a locking member (14) the rotation of which in the direction of withdrawing said seat belt (3) is made impossible in an emergency;
first and second seat belt load limiting mechanisms (7, 20, 28) for limiting load to be exerted on said seat belt (3) when rotation of said locking member (14) in the direction of withdrawing said seat belt (3) is made impossible with said spool (4) rotating relative to said locking member (14) in the direction of withdrawing said seat belt (3), and
prediction means (29, 30, 31, 32) for predicting the situation in an emergency, wherein said second seat belt load limiting mechanism (20, 28) comprises limit load setting means (20) for setting the limit load for said seat belt (3), and
limit load control means(28) for controlling said limit load setting means (20) to change the limit load of said seat belt (3) in an emergency,
and wherein said limit load setting means (20) are means capable of working repeatedly
**characterized in that**
the limit load setting means (20) sets the limit load for said seat belt (3) based on information to be confirmed before a collision, and
the limit load control means (28) controls said limit load setting means (20) to change the limit load of said seat belt (3) in an emergency based on the predicted situation in the emergency.

2. A seat belt retractor according to Claim 1, wherein said first seat belt load limiting mechanism (7) comprises any one of:
a load limiting mechanism for subjecting a torsion bar provided between said spool and said locking member to torsion deformation;
a load limiting mechanism for drawing a wire rod provided on any one side of said spool side and said locking base side through among engagement pins provided on the other side;
a load limiting mechanism for forcing a band plate provided on either one of said spool side and said locking base side to be forcibly deformed by a guide slot provided on the other side;
a load limiting mechanism for subjecting a tubular member provided on either one of said spool side and said locking base side to plastic deformation with a latching portion provided on the other side;
a load limiting mechanism for subjecting a U-shaped flat plate material of which one end is provided on either one of said spool side and said locking base side, and the other end is engaged with the other side to deformation;
a load limiting mechanism for subjecting a shear pin provided between said spool and said locking base to shear fracturing;
an EA mechanism for cutting a section to be cut provided on either one of said spool side and said locking base side with a cutting blade provided on the other side; and
a load limiting mechanism for severing a plate-shaped energy absorption member provided on either one of said spool side and said locking base side with a severing protrusion provided on the other side.

3. A seat belt retractor according to Claim 2, wherein load modes in three stages, namely a load mode due to the limit load setting means (20) being inoperative, a light load mode; and a heavy load mode, are set to said limit load beforehand.

## Patentansprüche

1. Sicherheitsgurtaufroller, der mindestens aufweist:
eine Spule (4) zum Aufrollen eines Sicherheitsgurts (3); einen Arretiermechanismus (6) mit einem Arretierteil (14), dessen Drehung in Ausziehrichtung des Sicherheitsgurts (3) in einem Notfall unmöglich gemacht wird;
einen ersten und einen zweiten Sicherheitsgurt-Lastbegrenzungsmechanismus (7, 20, 28) zum Begrenzen einer auf den Sicherheitsgurt (3) auszuübenden Last, wenn Drehung des Arretierteils (14) in Ausziehrichtung des Sicherheitsgurts (3) unmöglich gemacht ist, wobei die Spule (4) relativ zum Arretierteil (14) in Ausziehrichtung des Sicherheitsgurts (3) dreht, und
eine Vorhersageeinrichtung (29, 30, 31, 32) zum Vorhersagen der Situation in einem Notfall, wobei der zweite Sicherheitsgurt-Lastbegrenzungsmechanismus (20, 28) aufweist:
eine Grenzlast-Einstelleinrichtung (20) zum Einstellen der Grenzlast für den Sicherheitsgurt (3) und
eine Grenzlast-Steuereinrichtung (28) zum Steuern der Grenzlast-Einstelleinrichtung (20), um die Grenzlast des Sicherheitsgurts (3) in einem Notfall zu ändern,
und wobei die Grenzlast-Einstelselleinrichtung (20) eine Einrichtung ist, die wiederholt arbeiten kann,
**dadurch gekennzeichnet, daß**
die Grenzlast-Einstelleinrichtung (20) die Grenzlast für den Sicherheitsgurt (3) auf der Grundlage von Informationen einstellt, die vor einer Kollision zu bestätigen sind, und
die Grenzlast-Steuereinrichtung (28) die Grenzlast-Einstelleinrichtung (20) steuert, um die Grenzlast des Sicherheitsgurts (3) in einem Notfall auf der Grundlage der vorhergesagten Situation im Notfall zu ändern.

2. Sicherheitsgurtaufroller nach Anspruch 1, wobei der erste Sicherheitsgurt-Lastbegrenzungsmechanismus (7) aufweist:
einen Lastbegrenzungsmechanismus zum Einwirkenlassen von Torsionsverformung auf einen Torsionsstab, der zwischen der Spule und dem Arretierteil vorgesehen ist;
einen Lastbegrenzungsmechanismus zum Durchziehen eines Stabdrahts, der auf der Spulenseite oder der Arretierbasisseite vorgesehen ist, durch Eingriffsstifte, die auf der anderen Seite vorgesehen sind;
einen Lastbegrenzungsmechanismus zum Drücken einer Bandplatte, die auf der Spulenseite oder der Arretierbasisseite vorgesehen ist, um sie durch einen Führungsschlitz zwangsweise zu verformen, der auf der anderen Seite vorgesehen ist;
einen Lastbegrenzungsmechanismus zum Einwirkenlassen von plastischer Verformung auf ein röhrenförmiges Teil, das auf der Spulenseite oder der Arretierbasisseite vorgesehen ist, mit einem Einklinkabschnitt, der auf der anderen Seite vorgesehen ist;
einen Lastbegrenzungsmechanismus zum Einwirkenlassen von Verformung auf ein U-förmiges Flachplattenmaterial, bei dem ein Ende auf der Spulenseite oder der Arretierbasisseite vorgesehen ist und das andere Ende mit der anderen Seite in Eingriff steht;
einen Lastbegrenzungsmechanismus zum Einwirkenlassen von Scherbruch auf einen Abscherbolzen, der zwischen der Spule und der Arretierbasis vorgesehen ist;
einen EA-Mechanismus zum Schneiden eines zu schneidenden Teilstücks, das auf der Spulenseite oder der Arretierbasisseite vorgesehen ist, und mit einer Schneidklinge, die auf der anderen Seite vorgesehen ist; oder
einen Lastbegrenzungsmechanismus zum Abtrennen eines plattenförmigen Energieabsorptionsteils, das auf der Spulenseite oder der Arretierbasisseite vorgesehen ist, mit einem Abtrennvorsprung, der auf der anderen Seite vorgesehen ist.

3. Sicherheitsgurtaufroller nach Anspruch 2, wobei Lastmodi in drei Stufen, nämlich ein Lastmodus infolge der außer Betrieb gesetzten Grenzlast-Einstelleinrichtung (20), ein leichter Lastmodus und ein schwerer Lastmodus, für die Grenzlast vorab eingestellt sind.

## Revendications

1. Enrouleur de ceinture de sécurité, comprenant au moins :
une bobine (4) pour enrouler une ceinture de sécurité (3) ;
un mécanisme de verrouillage (6) comprenant un élément de verrouillage (14) dont la rotation dans le sens du retrait de ladite ceinture de sécurité (3) est rendue impossible lors d'une urgence ;
un premier et un second mécanisme de limite de charge (7, 20, 28) destinés à limiter la charge à exercer sur ladite ceinture de sécurité (3)
lorsque la rotation dudit élément de verrouillage (14) dans le sens du retrait de ladite ceinture de sécurité (3) est rendue impossible par la rotation de ladite bobine (4) par rapport au dit élément de verrouillage (14) dans le sens du retrait de ladite ceinture de sécurité (3), et
des moyens de prédiction (29, 30, 31, 32) pour prédire la situation lors d'une urgence,
dans lequel ledit second mécanisme de limite de charge (20, 28) comprend des moyens d'établissement de charge limite (20) pour établir la charge limite pour ladite ceinture de sécurité (3), et
des moyens de contrôle de charge limite (28) pour contrôler lesdits moyens d'établissement de charge limite (20) afin de modifier la charge limite de ladite ceinture de sécurité (3) lors d'une urgence,
et dans lequel lesdits moyens d'établissement de charge limite (20) sont des moyens aptes à fonctionner à répétition,
**caractérisé en ce que**
les moyens d'établissement de charge limite (20) établissent la charge limite pour ladite ceinture de sécurité (3) sur la base d'informations à confirmer avant une collision, et
les moyens de contrôle de charge limite (28) contrôlent lesdits moyens d'établissement de charge limite (20) pour changer la charge limite de ladite ceinture de sécurité (3) lors d'une urgence, sur la base de la situation prédite lors de l'urgence.

2. Enrouleur de ceinture de sécurité selon la revendication 1, dans ledit premier mécanisme de limite de charge (7) comprend n'importe lequel parmi :
un mécanisme de limite de charge destiné à soumettre une barre de torsion positionnée entre ladite bobine et ledit élément de verrouillage à une déformation par torsion ;
un mécanisme de limite de charge destiné à tirer une tige d'enroulement positionnée sur n'importe quel côté parmi le côté de ladite bobine et le côté de ladite base de verrouillage à travers des broches d'engagement positionnées sur l'autre côté ;
un mécanisme de limite de charge destiné à forcer une plaque de tension positionnée sur n'importe lequel parmi le côté de ladite bobine et le côté de ladite base de verrouillage, d'être déformée sous contrainte par une fente de guidage positionnée sur l'autre côté ;
un mécanisme de limite de charge destiné à soumettre un élément tubulaire positionné sur n'importe lequel parmi le côté de ladite bobine et le côté de ladite base de verrouillage, à une déformation plastique par une partie de verrouillage positionnée de l'autre côté ;
un mécanisme de limite de charge destiné à soumettre à une déformation un matériau formant plaque en forme de U dont une extrémité est positionnée sur n'importe lequel parmi le côté de ladite bobine et le côté de ladite base de verrouillage, et l'autre extrémité est en prise avec l'autre côté;
un mécanisme de limite de charge destiné à soumettre une cheville de cisaillement positionnée entre ladite bobine et ladite base de verrouillage, à une fracture par cisaillement ;
un mécanisme d'absorption d'énergie destiné à couper une section à couper positionnée sur n'importe lequel parmi le côté de ladite bobine et le côté de ladite base de verrouillage, au moyen d'une lame tranchante positionnée de l'autre côté ; et
un mécanisme de limite de charge destiné à rompre un élément d'absorption d'energie en forme d'une plaque positionné sur n'importe lequel parmi le côté de ladite bobine et le côté de ladite base de verrouillage, au moyen d'une saillie de rupture positionnée de l'autre côté.

3. Enrouleur de ceinture de sécurité selon la revendication 2, dans lequel des modes de charge à trois degrés, à savoir un mode de charge dû au fait que les moyens d'établissement de charge limite (20) sont inopérants, un mode de chargé légère et un mode de charge lourde, sont établis préalablement à ladite charge limite.
